# EUROPEAN PATENT APPLICATION

(11) **EP 4 462 716 A1**
(43) Date of publication of application: **13.11.2024**
(21) Application number: 24175117.1
(22) Date of filing: 10.05.2024
(51) Int. Cl.: H04L 5/00, H04L 27/00

(54) **SIDELINK PHYSICAL CHANNEL ENHANCEMENTS**

(30) Priority: 12.05.2023 US 202363501815 P; 09.05.2024 US 202418659130
(71) Applicant: Apple Inc., Cupertino, CA 95014 (US)
(72) Inventor: YE, Chunxuan, San Diego (US); ZHANG, Dawei, Saratoga (US); HE, Hong, Cupertino (US); SUN, Haitong, Cupertino (US); ZENG, Wei, San Diego (US); NIU, Huaning, Cupertino (US)
(74) Representative: COPA Copenhagen Patents

(57) **Abstract**

Apparatuses, systems, and methods for sidelink physical channel enhancements for unlicensed spectrum, e.g., in 5G NR systems and beyond. A UE may determine, for a contiguous resource block (RB) based sidelink physical channel transmission in SL-U, whether a sub-channel can be used for the sidelink physical channel transmission based on a condition associated with a number physical RBs (PRBs) configured for the sidelink physical channel. The UE may transmit, in response to determining that the condition is satisfied, the sidelink physical channel. The condition may be a total number of PRBs in a sub-channel not overlapping the guard band being greater than or equal to the number of PRBs configured for the sidelink physical channel or a portion of PRBs at a beginning of a sub-channel not overlapping with the guard band being greater than or equal to the number of PRBs configured for the sidelink physical channel

## Description

### FIELD

The invention relates to wireless communications, and more particularly to apparatuses, systems, and methods for sidelink physical channel enhancements for unlicensed spectrum, e.g., in 5G NR systems and beyond.

### DESCRIPTION OF THE RELATED ART

Wireless communication systems are rapidly growing in usage. In recent years, wireless devices such as smart phones and tablet computers have become increasingly sophisticated. In addition to supporting telephone calls, many mobile devices now provide access to the internet, email, text messaging, and navigation using the global positioning system (GPS) and are capable of operating sophisticated applications that utilize these functionalities.

Some examples of wireless communication standards include GSM, UMTS (associated with, for example, WCDMA or TD-SCDMA air interfaces), LTE, LTE Advanced (LTE-A), NR, HSPA, 3GPP2 CDMA2000 (e.g., 1xRTT, 1xEV-DO, HRPD, eHRPD), IEEE 802.11 (WLAN or Wi-Fi), BLUETOOTH^{™}, etc.

The ever-increasing number of features and functionality introduced in wireless communication devices also creates a continuous need for improvement in both wireless communications and in wireless communication devices. In particular, it is important to ensure the accuracy of transmitted and received signals through user equipment (UE) devices, e.g., through wireless devices such as cellular phones, base stations and relay stations used in wireless cellular communications. In addition, increasing the functionality of a UE device can place a significant strain on the battery life of the UE device. Thus, it is very important to also reduce power requirements in UE device designs while allowing the UE device to maintain good transmit and receive abilities for improved communications. Accordingly, improvements in the field are desired.

### SUMMARY

Embodiments relate to wireless communications, and more particularly to apparatuses, systems, and methods for sidelink physical channel enhancements for unlicensed spectrum, e.g., in 5G NR systems and beyond.

For example, in some embodiments, a UE (e.g., a baseband processor of a UE) may be configured to determine, for a contiguous resource block (RB) based sidelink physical channel transmission in SL-U, whether a sub-channel can be used for the sidelink physical channel transmission based on a condition associated with a number physical resource blocks (PRBs) configured for the sidelink physical channel. In some instances, the sidelink physical channel may be a PSCCH or a PSSCH. Further, the UE may be configured to transmit, in response to determining that the condition is satisfied, the sidelink physical channel. The condition may be a total number of PRBs in a sub-channel not overlapping the guard band being greater than or equal to the number of PRBs configured for the sidelink physical channel or a portion of PRBs at a beginning of a sub-channel not overlapping with the guard band being greater than or equal to the number of PRBs configured for the sidelink physical channel.

As another example, in some embodiments, a UE (e.g., a baseband processor of a UE) may be configured to set a transmission bandwidth to meet an occupied channel bandwidth (OCB) requirement. The UE may be configured to transmit the S-SSB a configured number of repetitions in a frequency domain. The gap may be included between repetitions to meet the OCB requirement.

As an additional example, in some embodiments, a UE (e.g., a baseband processor of a UE) may be configured to configure a gap between common PRBs and dedicated PRBs to avoid an in-band emission (IBE) from the common PRBs to the dedicated PRBs. The UE may be configured to transmit the PSFCH using the gap between the common PRBs and the dedicated PRBs.

As a yet further example, in some embodiments, a UE (e.g., a baseband processor of a UE) may be configured to, for multiple interlaces per sub-channel, for each orthogonal frequency division multiplexing (OFDM) symbol (e.g., for OFDM symbols of the sub-channel), use one of a frequency first interlacing rule or an interlacing first interlacing rule. In addition, the UE may be configured to, for interlacing multiple sub-channels in a transmission, for each OFDM symbol (e.g., for OFDM symbols of the sub-channel), use one of a sub-channel first interlacing rule, a frequency first interlacing rule, or an interlace first interlacing rule.

The techniques described herein may be implemented in and/or used with a number of different types of devices, including but not limited to unmanned aerial vehicles (UAVs), unmanned aerial controllers (UACs), a UTM server, base stations, access points, cellular phones, tablet computers, wearable computing devices, portable media players, and any of various other computing devices.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of various embodiments is considered in conjunction with the following drawings, in which:
Figure 1 illustrates an example wireless communication system according to some embodiments.
Figure 2 illustrates an example block diagram of a base station, according to some embodiments.
Figure 3 illustrates an example block diagram of a UE, according to some embodiments.
Figure 5A illustrates an example of multiple resource blocks spanning multiple sub-channels with overlap of a guard band, according to some embodiments.
Figure 5B illustrates an example of a single sub-channel that includes a guard band, according to some embodiments.
Figures 6A, 6B, and 6C illustrate examples of gap configurations for S-SSB repetitions in SL-U, according to some embodiments.
Figure 7 illustrates an example of a gap configuration for common and dedicated PRBs in a PSFCH resource, according to some embodiments.
Figures 8A and 8B illustrate examples PSCCH and PSSCH resource mapping, according to some embodiments.
Figures 9A and 9B illustrate examples of PSCCH resource mapping for multiple sub-channels, according to some embodiments.
Figure 11 illustrates a block diagram of an example of a method for transmitting a sidelink physical channel with overlap of a guard band in SL-U, according to some embodiments.

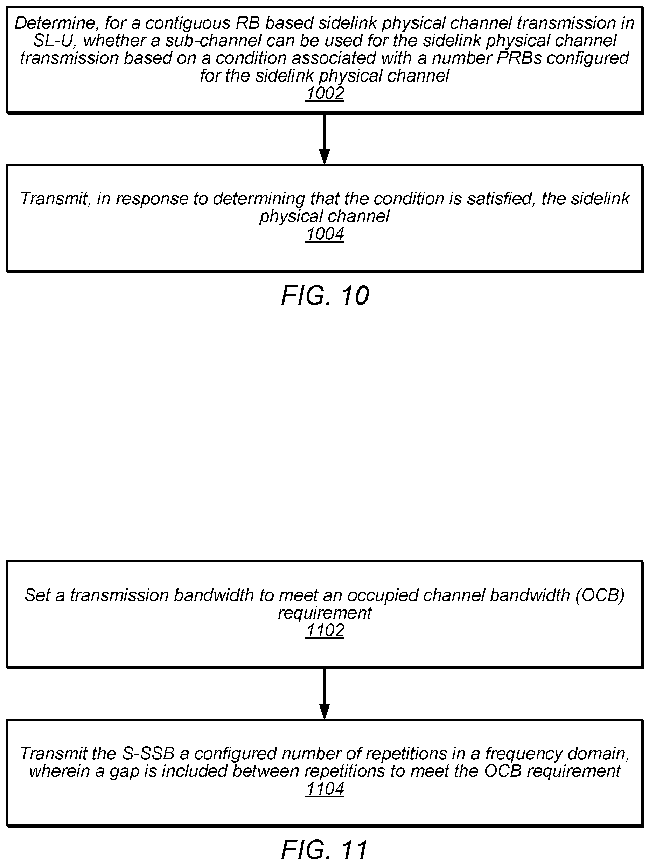

Figure 11 illustrates a block diagram of an example of a method for a sidelink synchronization signal block (S-SSB) in SL-U, according to some embodiments.

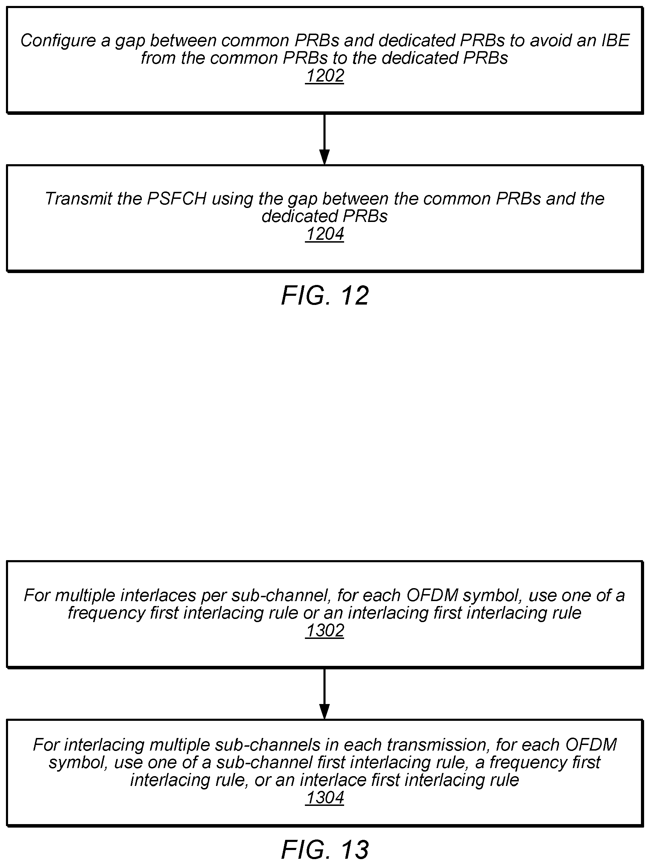

Figure 12 illustrates a block diagram of an example of a method for specifying a gap between common PRBs and dedicated PRBs for PSFCH transmissions in SL-U, according to some embodiments.
Figure 13 illustrates a block diagram of an example of a method for sidelink physical channel resource mapping in SL-U, according to some embodiments.

While the features described herein may be susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present disclosure. Definitions of the most prominently used acronyms that may appear throughout the present disclosure are provided below:
- **3GPP:** Third Generation Partnership Project
- **UE:** User Equipment
- **RF:** Radio Frequency
- **BS:** Base Station
- **DL:** Downlink
- **UL:** Uplink
- **LTE:** Long Term Evolution
- **NR:** New Radio
- **5GS:** 5G System
- **5GMM:** 5GS Mobility Management
- **5GC/5GCN:** 5G Core Network
- **SIM:** Subscriber Identity Module
- **eSIM:** Embedded Subscriber Identity Module
- **IE:** Information Element
- **CE:** Control Element
- **MAC:** Medium Access Control
- **SSB:** Synchronization Signal Block
- **PDCCH:** Physical Downlink Control Channel
- **PDSCH:** Physical Downlink Shared Channel
- **RRC:** Radio Resource Control

### Terms

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random-access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may include other types of non-transitory memory as well or combinations thereof. In addition, the memory medium may be located in a first computer system in which the programs are executed or may be located in a second different computer system which connects to the first computer system over a network, such as the Internet. In the latter instance, the second computer system may provide program instructions to the first computer for execution. The term "memory medium" may include two or more memory mediums which may reside in different locations, e.g., in different computer systems that are connected over a network. The memory medium may store program instructions (e.g., embodied as computer programs) that may be executed by one or more processors.
**Carrier Medium** - a memory medium as described above, as well as a physical transmission medium, such as a bus, network, and/or other physical transmission medium that conveys signals such as electrical, electromagnetic, or digital signals.
**Programmable Hardware Element** - includes various hardware devices comprising multiple programmable function blocks connected via a programmable interconnect. Examples include FPGAs (Field Programmable Gate Arrays), PLDs (Programmable Logic Devices), FPOAs (Field Programmable Object Arrays), and CPLDs (Complex PLDs). The programmable function blocks may range from fine grained (combinatorial logic or look up tables) to coarse grained (arithmetic logic units or processor cores). A programmable hardware element may also be referred to as "reconfigurable logic".
**User Equipment (UE) (or "UE Device")** - any of various types of computer systems devices which are mobile or portable and which performs wireless communications. Examples of UE devices include mobile telephones or smart phones (e.g., iPhone^{™}, Android^{™}-based phones), portable gaming devices (e.g., Nintendo DS^{™}, PlayStation Portable^{™}, Gameboy Advance^{™}, iPhone^{™}), laptops, wearable devices (e.g., smart watch, smart glasses), PDAs, portable Internet devices, music players, data storage devices, other handheld devices, unmanned aerial vehicles (UAVs) (e.g., drones), UAV controllers (UACs), and so forth. In general, the term "UE" or "UE device" can be broadly defined to encompass any electronic, computing, and/or telecommunications device (or combination of devices) which is easily transported by a user and capable of wireless communication.
**Base Station** - The term "Base Station" has the full breadth of its ordinary meaning, and at least includes a wireless communication station installed at a fixed location and used to communicate as part of a wireless telephone system or radio system.
**Processing Element (or Processor)** - refers to various elements or combinations of elements that are capable of performing a function in a device, such as a user equipment or a cellular network device. Processing elements may include, for example: processors and associated memory, portions or circuits of individual processor cores, entire processor cores, processor arrays, circuits such as an ASIC (Application Specific Integrated Circuit), programmable hardware elements such as a field programmable gate array (FPGA), as well any of various combinations of the above.
**Channel** - a medium used to convey information from a sender (transmitter) to a receiver. It should be noted that since characteristics of the term "channel" may differ according to different wireless protocols, the term "channel" as used herein may be considered as being used in a manner that is consistent with the standard of the type of device with reference to which the term is used. In some standards, channel widths may be variable (e.g., depending on device capability, band conditions, etc.). For example, LTE may support scalable channel bandwidths from 1.4 MHz to 20MHz. In contrast, WLAN channels may be 22MHz wide while Bluetooth channels may be 1Mhz wide. Other protocols and standards may include different definitions of channels. Furthermore, some standards may define and use multiple types of channels, e.g., different channels for uplink or downlink and/or different channels for different uses such as data, control information, etc.
**Band** - The term "band" has the full breadth of its ordinary meaning, and at least includes a section of spectrum (e.g., radio frequency spectrum) in which channels are used or set aside for the same purpose.
**Wi-Fi** - The term "Wi-Fi" (or WiFi) has the full breadth of its ordinary meaning, and at least includes a wireless communication network or RAT that is serviced by wireless LAN (WLAN) access points, and which provides connectivity through these access points to the Internet. Most modern Wi-Fi networks (or WLAN networks) are based on IEEE 802.11 standards and are marketed under the name "Wi-Fi". A Wi-Fi (WLAN) network is different from a cellular network.
**3GPP Access** - refers to accesses (e.g., radio access technologies) that are specified by 3GPP standards. These accesses include, but are not limited to, GSM/GPRS, LTE, LTE-A, and/or 5GNR. In general, 3GPP access refers to various types of cellular access technologies.
**Non-3GPP Access** - refers to any accesses (e.g., radio access technologies) that are not specified by 3GPP standards. These accesses include, but are not limited to, WiMAX, Wi-Fi, WLAN, and/or fixed networks. Non-3GPP accesses may be split into two categories, "trusted" and "untrusted": Trusted non-3GPP accesses can interact directly with an evolved packet core (EPC) and/or a 5G core (5GC) whereas untrusted non-3GPP accesses interwork with the EPC/5GC via a network entity, such as an Evolved Packet Data Gateway and/or a 5G NR gateway. In general, non-3GPP access refers to various types of non-cellular access technologies.
**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure may be initiated by input provided by the user, but the subsequent actions that are performed "automatically" are not specified by the user, i.e., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form but is not involved in the actual filling of the form (e.g., the user is not manually specifying answers to fields but rather they are being automatically completed). The present specification provides various examples of operations being automatically performed in response to actions the user has taken.
**Approximately** - refers to a value that is almost correct or exact. For example, approximately may refer to a value that is within 1 to 10 percent of the exact (or desired) value. It should be noted, however, that the actual threshold value (or tolerance) may be application dependent. For example, in some embodiments, "approximately" may mean within 0.1% of some specified or desired value, while in various other embodiments, the threshold may be, for example, 2%, 3%, 5%, and so forth, as desired or as required by the particular application.
**Concurrent** - refers to parallel execution or performance, where tasks, processes, or programs are performed in an at least partially overlapping manner. For example, concurrency may be implemented using "strong" or strict parallelism, where tasks are performed (at least partially) in parallel on respective computational elements, or using "weak parallelism", where the tasks are performed in an interleaved manner, e.g., by time multiplexing of execution threads.

Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

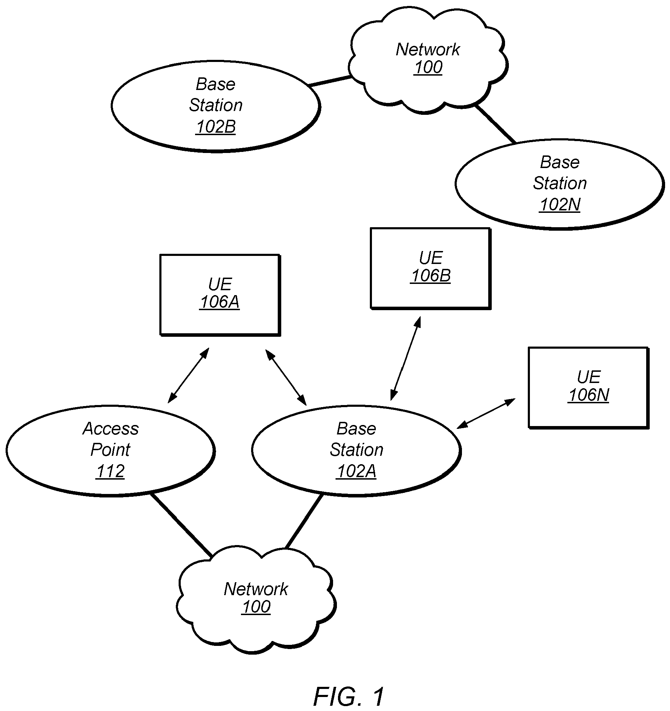

### Figure 1: Communication System

Figure 1 illustrates a simplified example wireless communication system, according to some embodiments. It is noted that the system of Figure 1 is merely one example of a possible system, and that features of this disclosure may be implemented in any of various systems, as desired.

As shown, the example wireless communication system includes a base station 102A which communicates over a transmission medium with one or more user devices 106A, 106B, etc., through 106N. Each of the user devices may be referred to herein as a "user equipment" (UE). Thus, the user devices 106 are referred to as UEs or UE devices.

The base station (BS) 102A may be a base transceiver station (BTS) or cell site (a "cellular base station") and may include hardware that enables wireless communication with the UEs 106A through 106N.

The communication area (or coverage area) of the base station may be referred to as a "cell." The base station 102A and the UEs 106 may be configured to communicate over the transmission medium using any of various radio access technologies (RATs), also referred to as wireless communication technologies, or telecommunication standards, such as LTE, LTE-Advanced (LTE-A), 5G new radio (5G NR), Wi-Fi, etc. Note that if the base station 102A is implemented in the context of LTE, it may alternately be referred to as an 'eNodeB' or `eNB'. Note that if the base station 102A is implemented in the context of 5G NR, it may alternately be referred to as 'gNodeB' or 'gNB'.

As shown, the base station 102A may also be equipped to communicate with a network 100 (e.g., a core network of a cellular service provider, a telecommunication network such as a public switched telephone network (PSTN), and/or the Internet, among various possibilities). Thus, the base station 102A may facilitate communication between the user devices and/or between the user devices and the network 100. In particular, the cellular base station 102A may provide UEs 106 with various telecommunication capabilities, such as voice, SMS and/or data services.

Base station 102A and other similar base stations (such as base stations 102B... 102N) operating according to the same or a different cellular communication standard may thus be provided as a network of cells, which may provide continuous or nearly continuous overlapping service to UEs 106A-N and similar devices over a geographic area via one or more cellular communication standards.

Thus, while base station 102A may act as a "serving cell" for UEs 106A-N as illustrated in Figure 1, each UE 106 may also be capable of receiving signals from (and possibly within communication range of) one or more other cells (which might be provided by base stations 102B-N and/or any other base stations), which may be referred to as "neighboring cells". Such cells may also be capable of facilitating communication between user devices and/or between user devices and the network 100. Such cells may include "macro" cells, "micro" cells, "pico" cells, and/or cells which provide any of various other granularities of service area size. For example, base stations 102A-B illustrated in Figure 1 might be macro cells, while base station 102N might be a micro cell. Other configurations are also possible.

In some embodiments, base station 102A may be a next generation base station, e.g., a 5G New Radio (5G NR) base station, or "gNB". In some embodiments, a gNB may be connected to a legacy evolved packet core (EPC) network and/or to a NR core (NRC) network. In addition, a gNB cell may include one or more transition and reception points (TRPs). In addition, a UE capable of operating according to 5G NR may be connected to one or more TRPs within one or more gNBs.

In addition, the UE 106 may be in communication with an access point 112, e.g., using a wireless networking (e.g., Wi-Fi) and/or peer-to-peer wireless communication protocol (e.g., Bluetooth, Wi-Fi peer-to-peer, etc.). The access point 112 may provide a connection to the network 100.

Note that a UE 106 may be capable of communicating using multiple wireless communication standards. For example, the UE 106 may be configured to communicate using a wireless networking (e.g., Wi-Fi) and/or peer-to-peer wireless communication protocol (e.g., Bluetooth, Wi-Fi peer-to-peer, etc.) in addition to at least one cellular communication protocol (e.g., LTE, LTE-A, 5G NR, etc.). The UE 106 may also or alternatively be configured to communicate using one or more global navigational satellite systems (GNSS, e.g., GPS or GLONASS), one or more mobile television broadcasting standards (e.g., ATSC-M/H or DVB-H), and/or any other wireless communication protocol, if desired. Other combinations of wireless communication standards (including more than two wireless communication standards) are also possible.

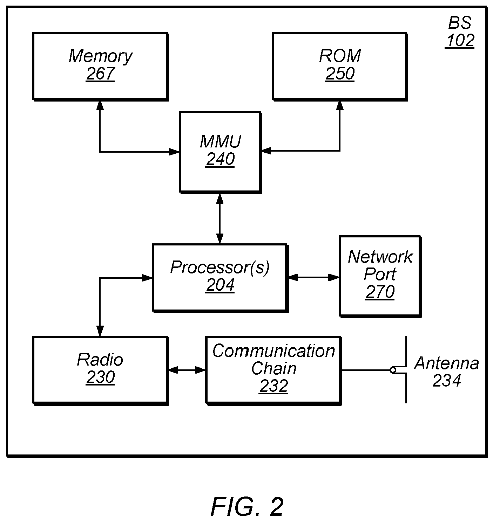

### Figure 2: Block Diagram of a Base Station

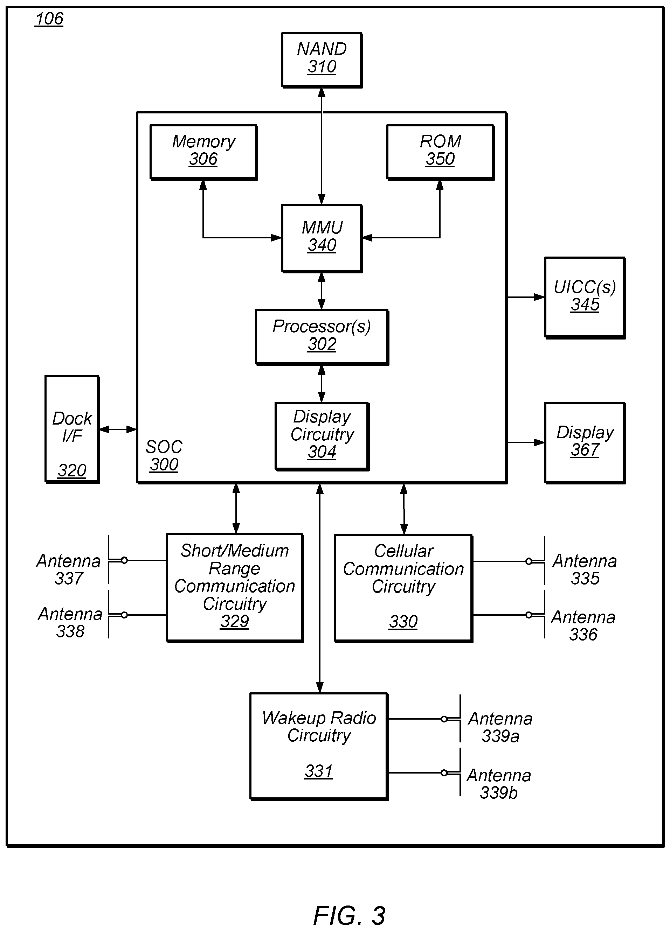

Figure 2 illustrates an example block diagram of a base station 102, according to some embodiments. It is noted that the base station of Figure 3 is merely one example of a possible base station. As shown, the base station 102 may include processor(s) 204 which may execute program instructions for the base station 102. The processor(s) 204 may also be coupled to memory management unit (MMU) 240, which may be configured to receive addresses from the processor(s) 204 and translate those addresses to locations in memory (e.g., memory 260 and read only memory (ROM) 250) or to other circuits or devices.

The base station 102 may include at least one network port 270. The network port 270 may be configured to couple to a telephone network and provide a plurality of devices, such as UE devices 106, access to the telephone network as described above in Figures 1 and 2.

The network port 270 (or an additional network port) may also or alternatively be configured to couple to a cellular network, e.g., a core network of a cellular service provider. The core network may provide mobility related services and/or other services to a plurality of devices, such as UE devices 106. In some cases, the network port 270 may couple to a telephone network via the core network, and/or the core network may provide a telephone network (e.g., among other UE devices serviced by the cellular service provider).

In some embodiments, base station 102 may be a next generation base station, e.g., a 5G New Radio (5G NR) base station, or "gNB". In such embodiments, base station 102 may be connected to a legacy evolved packet core (EPC) network and/or to a NR core (NRC) network. In addition, base station 102 may be considered a 5G NR cell and may include one or more transition and reception points (TRPs). In addition, a UE capable of operating according to 5G NR may be connected to one or more TRPs within one or more gNBs.

The base station 102 may include at least one antenna 234, and possibly multiple antennas. The at least one antenna 234 may be configured to operate as a wireless transceiver and may be further configured to communicate with UE devices 106 via radio 230. The antenna 234 communicates with the radio 230 via communication chain 232. Communication chain 232 may be a receive chain, a transmit chain or both. The radio 230 may be configured to communicate via various wireless communication standards, including, but not limited to, 5G NR, LTE, LTE-A, Wi-Fi, etc.

The base station 102 may be configured to communicate wirelessly using multiple wireless communication standards. In some instances, the base station 102 may include multiple radios, which may enable the base station 102 to communicate according to multiple wireless communication technologies. For example, as one possibility, the base station 102 may include an LTE radio for performing communication according to LTE as well as a 5G NR radio for performing communication according to 5GNR. In such a case, the base station 102 may be capable of operating as both an LTE base station and a 5G NR base station. As another possibility, the base station 102 may include a multi-mode radio which is capable of performing communications according to any of multiple wireless communication technologies (e.g., 5G NR and Wi-Fi, LTE and Wi-Fi, etc.).

As described further subsequently herein, the BS 102 may include hardware and software components for implementing or supporting implementation of features described herein. The processor 204 of the base station 102 may be configured to implement or support implementation of part or all of the methods described herein, e.g., by executing program instructions stored on a memory medium (e.g., a non-transitory computer-readable memory medium). Alternatively, the processor 204 may be configured as a programmable hardware element, such as an FPGA (Field Programmable Gate Array), or as an ASIC (Application Specific Integrated Circuit), or a combination thereof. Alternatively (or in addition) the processor 204 of the BS 102, in conjunction with one or more of the other components 230, 232, 234, 240, 250, 260, 270 may be configured to implement or support implementation of part or all of the features described herein.

In addition, as described herein, processor(s) 204 may be comprised of one or more processing elements. In other words, one or more processing elements may be included in processor(s) 204. Thus, processor(s) 204 may include one or more integrated circuits (ICs) that are configured to perform the functions of processor(s) 204. In addition, each integrated circuit may include circuitry (e.g., first circuitry, second circuitry, etc.) configured to perform the functions of processor(s) 204.

Further, as described herein, radio 230 may be comprised of one or more processing elements. In other words, one or more processing elements may be included in radio 230. Thus, radio 230 may include one or more integrated circuits (ICs) that are configured to perform the functions of radio 230. In addition, each integrated circuit may include circuitry (e.g., first circuitry, second circuitry, etc.) configured to perform the functions of radio 230.

### Figure 3: Block Diagram of a UE

Figure 3 illustrates an example simplified block diagram of a communication device 106, according to some embodiments. It is noted that the block diagram of the communication device of Figure 3 is only one example of a possible communication device. According to embodiments, communication device 106 may be a user equipment (UE) device, a mobile device or mobile station, a wireless device or wireless station, a desktop computer or computing device, a mobile computing device (e.g., a laptop, notebook, or portable computing device), a tablet, an unmanned aerial vehicle (UAV), a UAV controller (UAC) and/or a combination of devices, among other devices. As shown, the communication device 106 may include a set of components 300 configured to perform core functions. For example, this set of components may be implemented as a system on chip (SOC), which may include portions for various purposes. Alternatively, this set of components 300 may be implemented as separate components or groups of components for the various purposes. The set of components 300 may be coupled (e.g., communicatively; directly or indirectly) to various other circuits of the communication device 106.

For example, the communication device 106 may include various types of memory (e.g., including NAND flash 310), an input/output interface such as connector I/F 320 (e.g., for connecting to a computer system; dock; charging station; input devices, such as a microphone, camera, keyboard; output devices, such as speakers; etc.), the display 360, which may be integrated with or external to the communication device 106, and cellular communication circuitry 330 such as for 5G NR, LTE, GSM, etc., short to medium range wireless communication circuitry 329 (e.g., Bluetooth^{™} and WLAN circuitry), and wakeup radio circuitry 331. In some embodiments, communication device 106 may include wired communication circuitry (not shown), such as a network interface card, e.g., for Ethernet.

The cellular communication circuitry 330 may couple (e.g., communicatively; directly or indirectly) to one or more antennas, such as antennas 335 and 336 as shown. The short to medium range wireless communication circuitry 329 may also couple (e.g., communicatively; directly or indirectly) to one or more antennas, such as antennas 337 and 338 as shown. Alternatively, the short to medium range wireless communication circuitry 329 may couple (e.g., communicatively; directly or indirectly) to the antennas 335 and 336 in addition to, or instead of, coupling (e.g., communicatively; directly or indirectly) to the antennas 337 and 338. The wakeup radio circuitry 331may also couple (e.g., communicatively; directly or indirectly) to one or more antennas, such as antennas 339a and 339b as shown. Alternatively, the wakeup radio circuitry 331may couple (e.g., communicatively; directly or indirectly) to the antennas 335 and 336 in addition to, or instead of, coupling (e.g., communicatively; directly or indirectly) to the antennas 339a and 339b. The short to medium range wireless communication circuitry 329 and/or cellular communication circuitry 330 may include multiple receive chains and/or multiple transmit chains for receiving and/or transmitting multiple spatial streams, such as in a multiple-input multiple output (MIMO) configuration. The wakeup radio circuitry 331 may include a wakeup receiver, e.g., wakeup radio circuitry 331 may be a wakeup receiver. In some instances, wakeup radio circuitry 331 may be a low power and/or ultra-low power wakeup receiver. In some instances, wakeup radio circuitry may only be powered/active when cellular communication circuitry 330 and/or the short to medium range wireless communication circuitry 329 are in a sleep/no power/inactive state. In some instances, wakeup radio circuitry 331 may monitor (e.g., periodically) a specific frequency/channel for a wakeup signal. Receipt of the wakeup signal may trigger the wakeup radio circuitry 331 to notify (e.g., directly and/or indirectly) cellular communication circuitry 330 to enter a powered/active state.

In some embodiments, as further described below, cellular communication circuitry 330 may include dedicated receive chains (including and/or coupled to, e.g., communicatively; directly or indirectly. dedicated processors and/or radios) for multiple RATs (e.g., a first receive chain for LTE and a second receive chain for 5G NR). In addition, in some embodiments, cellular communication circuitry 330 may include a single transmit chain that may be switched between radios dedicated to specific RATs. For example, a first radio may be dedicated to a first RAT, e.g., LTE, and may be in communication with a dedicated receive chain and a transmit chain shared with an additional radio, e.g., a second radio that may be dedicated to a second RAT, e.g., 5G NR, and may be in communication with a dedicated receive chain and the shared transmit chain.

The communication device 106 may also include and/or be configured for use with one or more user interface elements. The user interface elements may include any of various elements, such as display 360 (which may be a touchscreen display), a keyboard (which may be a discrete keyboard or may be implemented as part of a touchscreen display), a mouse, a microphone and/or speakers, one or more cameras, one or more buttons, and/or any of various other elements capable of providing information to a user and/or receiving or interpreting user input.

The communication device 106 may further include one or more smart cards 345 that include SIM (Subscriber Identity Module) functionality, such as one or more UICC(s) (Universal Integrated Circuit Card(s)) cards 345. Note that the term "SIM" or "SIM entity" is intended to include any of various types of SIM implementations or SIM functionality, such as the one or more UICC(s) cards 345, one or more eUICCs, one or more eSIMs, either removable or embedded, etc. In some embodiments, the UE 106 may include at least two SIMs. Each SIM may execute one or more SIM applications and/or otherwise implement SIM functionality. Thus, each SIM may be a single smart card that may be embedded, e.g., may be soldered onto a circuit board in the UE 106, or each SIM 310 may be implemented as a removable smart card. Thus, the SIM(s) may be one or more removable smart cards (such as UICC cards, which are sometimes referred to as "SIM cards"), and/or the SIMs 310 may be one or more embedded cards (such as embedded UICCs (eUICCs), which are sometimes referred to as "eSIMs" or "eSIM cards").

As shown, the SOC 300 may include processor(s) 302, which may execute program instructions for the communication device 106 and display circuitry 304, which may perform graphics processing and provide display signals to the display 360. The processor(s) 302 may also be coupled to memory management unit (MMU) 340, which may be configured to receive addresses from the processor(s) 302 and translate those addresses to locations in memory (e.g., memory 306, read only memory (ROM) 350, NAND flash memory 310) and/or to other circuits or devices, such as the display circuitry 304, short to medium range wireless communication circuitry 329, cellular communication circuitry 330, connector I/F 320, and/or display 360. The MMU 340 may be configured to perform memory protection and page table translation or set up. In some embodiments, the MMU 340 may be included as a portion of the processor(s) 302.

As noted above, the communication device 106 may be configured to communicate using wireless and/or wired communication circuitry. The communication device 106 may be configured to perform methods for sidelink physical channel enhancements for unlicensed spectrum, e.g., in 5G NR systems and beyond, as further described herein.

As described herein, the communication device 106 may include hardware and software components for implementing the above features for a communication device 106 to communicate a scheduling profile for power savings to a network. The processor 302 of the communication device 106 may be configured to implement part or all of the features described herein, e.g., by executing program instructions stored on a memory medium (e.g., a non-transitory computer-readable memory medium). Alternatively (or in addition), processor 302 may be configured as a programmable hardware element, such as an FPGA (Field Programmable Gate Array), or as an ASIC (Application Specific Integrated Circuit). Alternatively (or in addition) the processor 302 of the communication device 106, in conjunction with one or more of the other components 300, 304, 306, 310, 320, 329, 330, 340, 345, 350, 360 may be configured to implement part or all of the features described herein.

In addition, as described herein, processor 302 may include one or more processing elements. Thus, processor 302 may include one or more integrated circuits (ICs) that are configured to perform the functions of processor 302. In addition, each integrated circuit may include circuitry (e.g., first circuitry, second circuitry, etc.) configured to perform the functions of processor(s) 302.

Further, as described herein, cellular communication circuitry 330 and short to medium range wireless communication circuitry 329 may each include one or more processing elements. In other words, one or more processing elements may be included in cellular communication circuitry 330 and, similarly, one or more processing elements may be included in short to medium range wireless communication circuitry 329. Thus, cellular communication circuitry 330 may include one or more integrated circuits (ICs) that are configured to perform the functions of cellular communication circuitry 330. In addition, each integrated circuit may include circuitry (e.g., first circuitry, second circuitry, etc.) configured to perform the functions of cellular communication circuitry 330. Similarly, the short to medium range wireless communication circuitry 329 may include one or more ICs that are configured to perform the functions of short to medium range wireless communication circuitry 329. In addition, each integrated circuit may include circuitry (e.g., first circuitry, second circuitry, etc.) configured to perform the functions of short to medium range wireless communication circuitry 329.

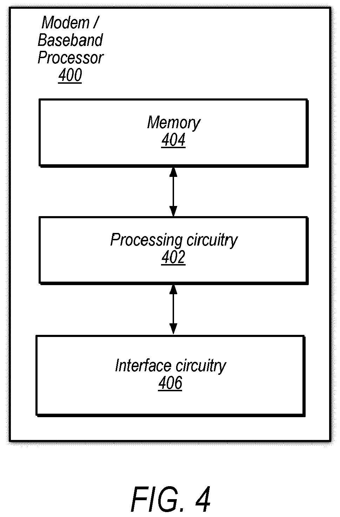

### Figure 4 - Block Diagram of a Modem or Baseband Processor

Figure 4 illustrates an example block diagram of a modem 400, which may also be referred to as baseband processor 400, according to some embodiments. The modem 400 may provide signal processing functionality for one or more wireless communication technologies, such as Wi-Fi, Bluetooth, and/or a cellular (e.g., 3GPP) communication technology. Thus, as one possibility, modem 400 may represent a Wi-Fi modem; for example, the modem 400 illustrated in Figure 4 may represent one possible example of Wi-Fi modem 232 illustrated in Figure 2. As another possibility, modem 400 may represent a cellular modem or cellular baseband processor; for example, the modem 400 illustrated in Figure 4 may represent one possible example of cellular modem 234 illustrated in Figure 2. As a still further possibility, modem 400 may represent a Bluetooth modem; for example, the modem 400 illustrated in Figure 4 may represent one possible example of Wi-Fi modem 236 illustrated in Figure 2. In some embodiments, the modem 400 could implement functionality for supporting communication according to multiple wireless communication technologies. At least in some embodiments, the modem 400 may run a real-time operating system, e.g., for facilitating performance of timing-dependent wireless communication functionality.

The modem 400 may include processing circuitry 402, which could include one or more processor cores, ASICs, programmable hardware elements, digital signal processors, and/or other processing elements. The processing circuitry may be capable of preparing baseband signals for up-conversion and transmission by radio circuitry of a wireless device, and/or for processing baseband signals received and down-converted by radio circuitry of a wireless device. Such processing could include signal modulation, encoding, decoding, etc., among various possible functions. The processing circuitry may also or alternatively be capable of performing functionality for one or more baseband and/or other layers/sublayers of a protocol stack for the wireless communication technology (or technologies) implemented by the modem 400, such as physical layer (PHY) functionality, media access control (MAC) functionality, logical link control (LLC) functionality, radio resource control (RRC) functionality, radio link control (RLC) functionality, etc. In some embodiments, the modem 400 may itself include at least some radio circuitry (e.g., for performing the conversion of input baseband signals to radio frequency signals and/or of input radio frequency signals to baseband signals). Alternatively, or in addition, some or all such functions may be performed by separate radio/transceiver components of the wireless device.

The modem 400 may also include memory 404, which may include a non-transitory computer-readable memory medium. The memory 404 can include program instructions for performing signal processing and/or any of various possible general processing functions. The processing circuitry 402 may be capable of executing the program instructions stored in the memory 404. The memory 404 can also store data generated and/or used during processing performed by the processing circuitry 402.

As shown, the modem 400 may further include interface circuitry, e.g., for communicating with other components of a wireless device (such as STA 106 or AP 104 illustrated in Figures 1-3), such as an application processor, radio / transceiver circuitry, and/or any of various other components. Such interfaces may be implemented in any of various ways; for example, as one possibility, the modem 400 can have a direct interface with transceiver circuitry of a wireless device, and may have an additional indirect interface with an application processor and/or other components of the wireless device by way of a system bus. Other configurations are also possible.

At least according to some embodiments, the hardware and software components of the modem 400 may be configured to implement or support implementation of features described herein, such as performing methods for sidelink physical channel enhancements for unlicensed spectrum, e.g., in 5G NR systems and beyond, among various other possible features. For example, the processing circuitry 402 of the modem 400 may be configured to implement, or support implementation of, part or all of the methods described herein, e.g., by executing program instructions stored on memory (e.g., non-transitory computer-readable memory medium) 404 and/or using dedicated hardware components.

### Sidelink Physical Channel Enhancements

3GPP Release 18 sidelink on unlicensed spectrum evolution began with the study and specification of sidelink on unlicensed spectrum for both mode 1 and mode 2 where Uu operation for mode 1 is limited to licensed spectrum only. To date, it has been decided that channel access mechanisms from NR-U shall be reused for sidelink unlicensed operation. Further, the applicability of sidelink resource reservation from 3GPP Release 16 and Release 17 were to be assessed for applicability to sidelink unlicensed operation within the boundaries of unlicensed channel access mechanism and operation. Also, to date, it has been decided that physical channel design would require changes to NR sidelink physical channel structures and procedures to operate on unlicensed spectrum and that that existing NR sidelink and NR-U channel structure shall be reused as the baseline with no specific enhancements for existing NR SL features.

Additionally, it has been agreed that for contiguous resource block (RB) based PSCCH/PSSCH transmission in sidelink unlicensed operation (SL-U), regarding sub-channel(s) which include intracell guard band physical RBs (PRBs), that either such sub-channel(s) can be used for PSCCH/PSSCH transmission (note that PRBs within intra-cell guard band are not used for PSCCH transmission as per previous agreement) or such sub-channel(s) cannot be used for PSCCH transmission but can be used for PSSCH transmission. Left undecided were conditions to apply the above and impacts on definition of candidate resources and resource selection.

In addition, for sidelink synchronization signal block (S-SSB) transmission within an RB set, for 15 kilohertz (kHz) and 30 kHz sub-carrier spacing (SCS), it has been decided to support transmission of legacy sidelink primary synchronization signal (S-PSS)/sidelink secondary synchronization signal (S-SSS)/ physical sidelink broadcast channel (PSBCH) N times by repetition in frequency domain and that there is a gap between the repetition(s) to meet occupied channel bandwidth (OCB) requirement and transmission of a legacy S-SSB. Left undecided was whether a length of gap between repetitions is (pre-) configured or pre-defined, a value of N, whether and/or how to reduce peak-to-average-power ratio (PAPR), and whether there can be no gap.

Further, for physical sidelink feedback channel (PSFCH) transmission with 15 kHz and 30 kHz SCS, it has been decided to support one or more of that each PSFCH transmission occupies one common interlace and K3 dedicated PRB(s) (where K3 is (pre-) configured), that each PSFCH transmission occupies one dedicated interlace, or that each PSFCH transmission occupies K4 dedicated PRB(s) and K2 common PRB(s), where the K2 common PRBs locate at the two edges of a RB set (where K2 is set to a value of two and K4 is (pre-) configured). However, left undecided beyond which of the above is used, is whether an in-band emission (IBE) issue exists and whether and/or how to address such an issue, e.g., whether to introduce guard band PRB/resource element (RE) between common PRB and dedicated PRB.

Therefore, improvements are desired.

Embodiments described herein provide systems, methods, and mechanisms for sidelink physical channel enhancements for unlicensed spectrum, including systems, methods, mechanisms for a sub-channel with overlap of guard band for PSCCH/PSSCH transmission, S-SSB repetitions in SL-U, PSFCH with a gap between common PRBs and dedicated PRBs, and PSCCH and PSSCH resource mapping.

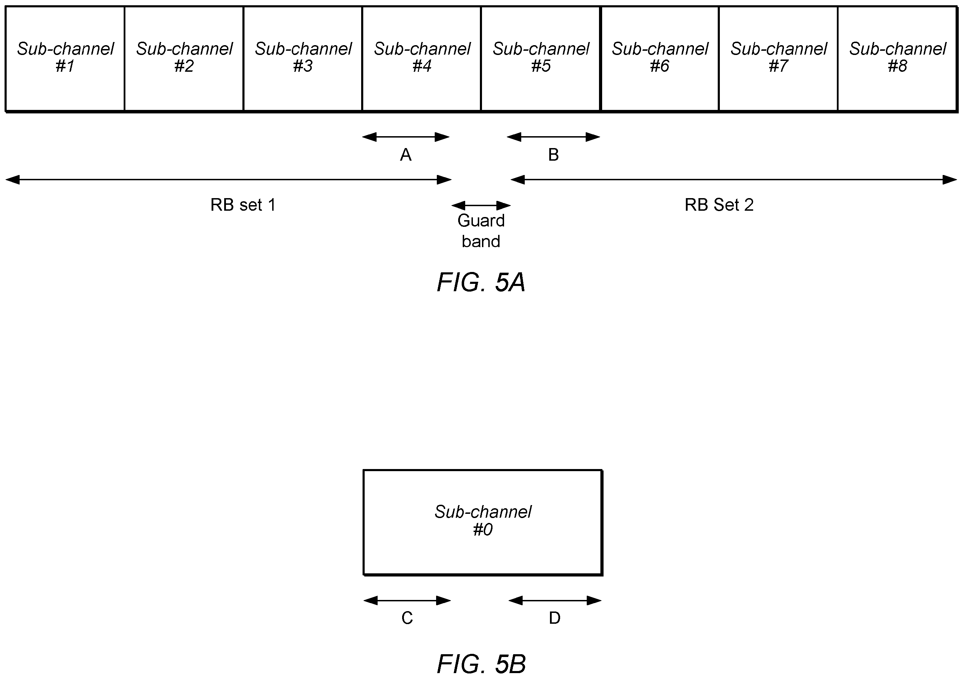

For example, in some instances, for a sub-channel with overlap of guard band for PSCCH/PSSCH transmission and assuming a number of (pre-) configured PSCCH is N PRBs, then, in a contiguous RB-based PSCCH/PSSCH transmission in SL-U, the sub-channel may be used for PSCCH/PSSCH transmission when a total number of PRBs in the sub-channel not overlapping with guard band is greater than or equal to N. Otherwise, the sub-channel may be used for PSSCH transmission, but cannot be used for PSCCH transmission. For example, Figure 5A illustrates an example of multiple resource blocks spanning multiple sub-channels with overlap of a guard band, according some embodiments. As shown, a first RB set (e.g., RB set #1 may include sub-channels 1, 2, and 3 and a portion of sub-channel 4. The portion of sub-channel 4 included in the first RB set may include A RBs. as shown. Similarly, a second RB set (e.g., RB set 2) may include a portion of sub-channel 5 as well as sub-channels 6, 7, and 8. The portion of sub-channel 5 included in the second RB set may include B RBs, as shown. Further, a guard band may span a portion of sub-channel 4 and a portion of sub-channel 5. Thus, in some instances, when A is greater than or equal to the number of (pre-) configured PSCCH, e.g., N, then sub-channel 4 may be used for PSCCH/PSSCH transmission. Otherwise, sub-channel 4 cannot be used for PSCCH/PSSCH transmission. Similarly, in some instances, when B is greater than or equal to the number of (pre-) configured PSCCH, e.g., N, then sub-channel 5 may be used for PSCCH/PSSCH transmission. Otherwise, sub-channel 5 cannot be used for PSCCH/PSSCH transmission. As another example, Figure 5B illustrates an example of a single sub-channel that includes a guard band, according to some embodiments. As shown, the sub-channel (e.g., sub-channel 0) may include three portions. A first portion, starting at a beginning of the sub-channel, may include C RBs, a second portion that follows the first portion may include the guard band, and a third portion that follows the second portion may include D RBs. Thus, in some instances, when a sum of C and D is greater than or equal to the number of (pre-) configured PSCCH, e.g., N, then sub-channel 0 may be used for PSCCH/PSSCH transmission. Otherwise, sub-channel 4 cannot be used for PSCCH/PSSCH transmission.

As another example, in some instances, for a sub-channel with overlap of guard band for PSCCH/PSSCH transmission and assuming a number of (pre-) configured PSCCH is N PRBs, then, in a contiguous RB-based PSCCH/PSSCH transmission in SL-U, the sub-channel may be used for PSCCH/PSSCH transmission when a first N PRBs in the sub-channel does not overlap with the guard band. Otherwise, the sub-channel may be used for PSSCH transmission, but cannot be used for PSCCH transmission. Returning to the example of Figure 5A, in some instances, when A is greater than or equal to the number of (pre-) configured PSCCH, e.g., N, then sub-channel 4 may be used for PSCCH/PSSCH transmission. Otherwise, sub-channel 4 cannot be used for PSCCH/PSSCH transmission. Further, sub-channel 5 cannot be sued for PSCCH/PSSCH transmission since sub-channel 5 begins with the guard band. Similarly, returning to Figure 5B, in some instances, sub-channel 0 cannot be used for PSCCH/PSSCH transmission unless C is greater than or equal to the number of (pre-) configured PSCCH, e.g., N.

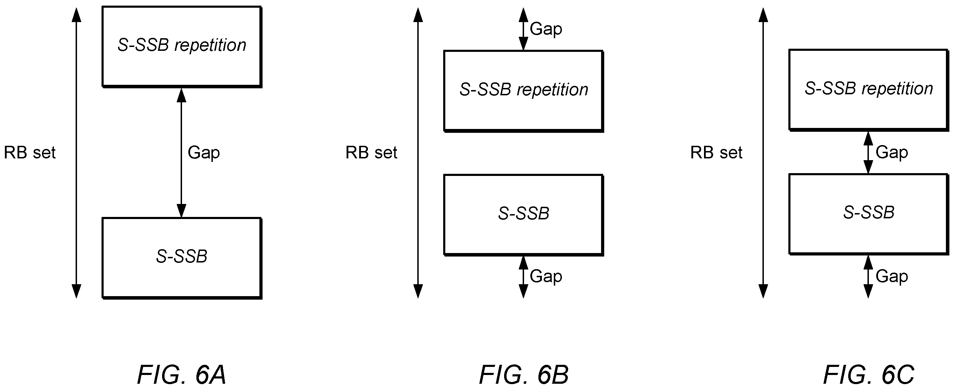

As another example, in some instances, regarding S-SSB repetitions in SL-U where each S-SSB occupies 11 PRBs and each RB set has a 20 mega hertz (MHz) bandwidth, a legacy S-PSS/S-SSS/PSBCH may be transmitted N times by repetition in frequency domain with a gap between repetitions to meet OCB requirement. In some instances, two S-SSBs may always be configured to edges of a SL bandwidth part (BWP) or SL resource pool, e.g., as illustrated by Figure 6A. In this way, a length of the gap may be pre-defined between 2 S-SSB repetitions. For example, a sidelink frequency configuration information element (IE), e.g., such as SL-FreqConfig, may be enhanced and/or modified to include a parameter, e.g., such as an addition sl-AbsoluteFreqeuncySSB_2 parameter, to indicate a location of the second S-SSB. In other instances, a gap from an S-SSB starting PRB to an RB set starting PRB may (pre-) configured and/or (pre-) defined, e.g., as illustrated by Figure 6B. In such instances, the gap from S-SSB repetition ending PRB to the RB set ending PRB may have the same value or a different value (which may also be (pre-) configured and/or (pre-) defined). Additionally, in such instances, a gap between two S-SSBs may be determined autonomously. In yet other instances, a gap from an S-SSB ending PRB to an S-SSB repetition starting PRB may (pre-) configured, e.g., as illustrated by Figure 6C. Further, a gap from an S-SSB starting PRB to an RB set starting PRB may (pre-) configured and/or (pre-) defined.

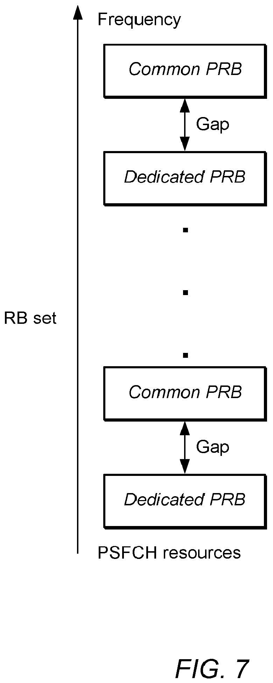

As a further example, in some instances, PSFCH resources, a gap may be included between a common PRB and a dedicated PRB, e.g., as illustrated by Figure 7. In some instances, the gap may aid in avoiding IBE from common PRBs to dedicated PRBs. In some instances, the gap may be (pre-) configured. In some instances, the configuration of the dedicated PRBs PSFCH may be limited (e.g., not all PRBs are suitable for dedicated PRBs). For example, both an upper bound and a lower bound of a bitmap for dedicated PRBs may be restricted. In some instances, the bitmap may be of a length equal to a number of PRBs in an RB set. However, a first X bits and a last X bits in the bitmap may be zero (e.g., not used for dedicated PRBs). In other instances, a bitmap may be of a length of 2X less than a number of PRBs, where X may be (pre-) defined (e.g., such as 5 or 10 PRBs).

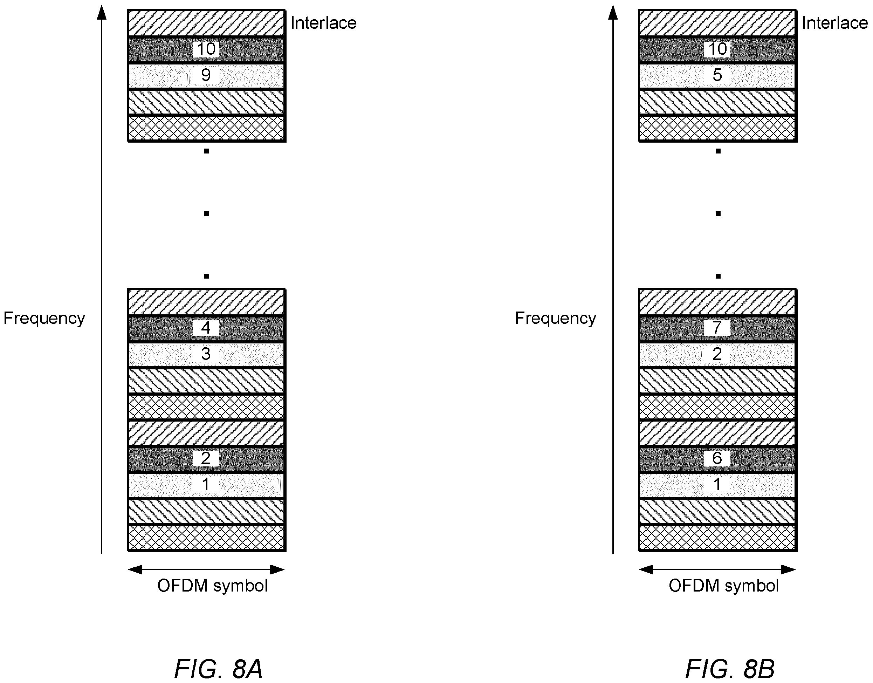

As a yet further example, in some instances, for PSCCH and PSSCH resource mapping, for an OFDM symbol, multiple interlace mapping may be performed per sub-channel for both PSCCH and PSSCH. In some instances, as illustrated by Figure 8A, the mapping may be according to a frequency first rule. Note that in such instances, a modulation symbol may be placed on a lowest unoccupied frequency PRB of a sub-channel. In other instances, as illustrated by Figure 8B, the mapping may be according to an interlace first rule. Note that in such instances, a modulation symbol may be placed on a lowest unoccupied frequency PRB of a lowest interlace of a sub-channel. Then, mapping may continue with a next unoccupied interlace.

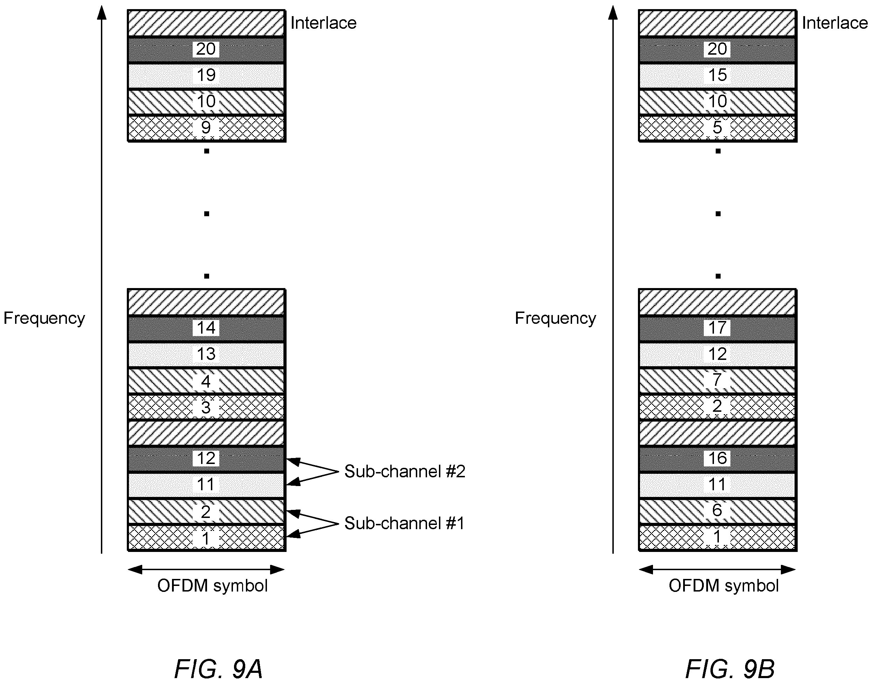

As yet another example, in some instances, for PSCCH resource mapping, for an OFDM symbol where there are multiple sub-channels in a transmission, an interlace mapping may be according to a sub-channel first rule, a frequency first rule, or an interlace first rule. In some instances, e.g., as illustrated by Figure 9A, the mapping may be according to a sub-channel first rule that incorporates a frequency first rule. The mapping may start with a lowest sub-channel according to the frequency first rule followed by the next lowest sub-channel according to the frequency first rule. In some instances, the mapping may be according to a sub-channel first rule that incorporates an interlace first rule. The mapping may start with a lowest sub-channel according to the interlace first rule followed by the next lowest sub-channel according to the interlace first rule. In some instances, the mapping may be according to a frequency first rule and a modulation symbol may be placed on a lowest unoccupied frequency PRB among all PRBs used for the transmissions across multiple sub-channels. In some instances, e.g., as illustrated by Figure 9B, the mapping may be according to an interlace first rule and the mapping may start at a lowest interlace for the transmission and continue with a next lowest interlace for the transmission.

Figure 10 illustrates a block diagram of an example of a method for transmitting a sidelink physical channel with overlap of a guard band in SL-U, according to some embodiments. The method shown in Figure 10 may be used in conjunction with any of the systems, methods, or devices shown in the Figures, among other devices. For example, a processor (such as baseband processor 400 illustrated in and described with respect to Figure 4) and/or other hardware of such a device may be configured to cause the device to perform any combination of the illustrated method elements and/or other method elements. In various embodiments, some of the method elements shown may be performed concurrently, in a different order than shown, or may be omitted. Additional method elements may also be performed as desired. As shown, this method may operate as follows.

At 1002, a UE, such as UE 106, may determine, for a contiguous resource block (RB) based sidelink physical channel transmission in SL-U, whether a sub-channel can be used for the sidelink physical channel transmission based on a condition associated with a number physical resource blocks (PRBs) configured for the sidelink physical channel. In some instances, the sidelink physical channel may be a PSCCH or a PSSCH.

At 1004, the UE may transmit, in response to determining that the condition is satisfied, the sidelink physical channel. In some instances, the condition may be a total number of PRBs in a sub-channel not overlapping the guard band being greater than or equal to the number of PRBs configured for the sidelink physical channel. In some instances, the condition may be a portion of PRBs at a beginning of a sub-channel not overlapping with the guard band being greater than or equal to the number of PRBs configured for the sidelink physical channel.

In some instances, the UE may transmit, when the condition is not satisfied, a first type of sidelink physical channel, wherein a second type of sidelink physical channel is barred from transmission. The first type of sidelink physical channel may be PSSCH and the second type of sidelink physical channel may be PSCCH.

In some instances, the guard band spans portions of two sub-channels. In some instances, the guard band may be within a sub-channel.

In some instances, the UE may, for multiple interlaces per sub-channel, for each orthogonal frequency division multiplexing (OFDM) symbol, use one of a frequency first interlacing rule or an interlacing first interlacing rule, e.g., a first interlacing rule. In addition, the UE may, for interlacing multiple sub-channels in a transmission, for an OFDM symbol, use one of a sub-channel first interlacing rule, a frequency first interlacing rule, or an interlace first interlacing rule, e.g., a second interlacing ruled.

In some instances, the multiple interlacing per sub-channel may be applied to both a first type of sidelink physical channel and a second type of sidelink physical channel and the interlacing of multiple sub-channels in a transmission may be applied to the first type of sidelink physical channel but not to the second type of sidelink physical channel. The first type may be PSCCH and the second type may be PSSCH.

In some instances, for multiple interlaces per sub-channel, for the frequency first interlacing rule, a modulation symbol may be placed on a lowest unoccupied frequency physical resource block of the sub-channel. In some instances, for multiple interlaces per sub-channel, for the interlace first interlacing rule, a modulation symbol may be placed on a lowest unoccupied frequency physical resource block of a lowest interlace of a sub-channel.

In some instances, for interlacing multiple sub-channels in a transmission, for the sub-channel first interlacing rule, mapping may start with a lowest sub-channel and a modulation symbol is placed on a lowest unoccupied frequency physical resource block of the sub-channel according to a frequency first interlacing rule or a modulation symbol is placed on a lowest unoccupied frequency physical resource block of a lowest interlace of a sub-channel according an interlace first interlacing rule. In some instances, for interlacing multiple sub-channels in a transmission, for the frequency first interlacing rule, a modulation symbol may be placed on the lowest unoccupied frequency physical resource block (PRB) among all PRBs used for transmission, across multiple sub-channels. In some instances, for interlacing multiple sub-channels in a transmission, for the interlace first interlacing rule, mapping may start with a lowest interlace for the transmission and continues to a next lowest interlace for the transmission.

Figure 11 illustrates a block diagram of an example of a method for a sidelink synchronization signal block (S-SSB) in SL-U, according to some embodiments. The method shown in Figure 11 may be used in conjunction with any of the systems, methods, or devices shown in the Figures, among other devices. For example, a processor (such as baseband processor 400 illustrated in and described with respect to Figure 4) and/or other hardware of such a device may be configured to cause the device to perform any combination of the illustrated method elements and/or other method elements. In various embodiments, some of the method elements shown may be performed concurrently, in a different order than shown, or may be omitted. Additional method elements may also be performed as desired. As shown, this method may operate as follows.

At 1102, a UE, such as UE 106, may set a transmission bandwidth to meet an occupied channel bandwidth (OCB) requirement.

At 1104, the UE may transmit the S-SSB a configured number of repetitions in a frequency domain, wherein a gap is included between repetitions to meet the OCB requirement.

In some instances, S-SSB repetitions may be configured to edges of a sidelink bandwidth part/sidelink resource pool and the S-SSB configuration may pre-define the gap between the S-SSB repetitions. In some instances, a first parameter in an SL-FreqConfig information element may indicate a location of a first S-SSB repetition in the sidelink bandwidth part/sidelink resource pool and a second parameter in the SL-FreqConfig information element may indicate a location of a second S-SSB repetition in the sidelink bandwidth part/sidelink resource pool, thereby configuring the gap between the first S-SSB repetition and the second S-SSB repetition.

In some instances, a first gap from a starting physical resource block (RB) of an S-SSB repetition to an RB starting PRB may be configured or defined. In addition, a second gap from an ending RB of the S-SSB repetition to an RB set ending PRB may be configured or defined. In some instances, the first gap and the second gap may be equal to the second gap. In other instances, the first gap may not be equal to the second gap. In some instances, the UE may determine the gap between S-SSB repetitions based on the first gap and the second gap.

In some instances, the gap between S-SSB repetitions may be configured or defined.

Figure 12 illustrates a block diagram of an example of a method for specifying a gap between common PRBs and dedicated PRBs for PSFCH transmissions in SL-U, according to some embodiments. The method shown in Figure 12 may be used in conjunction with any of the systems, methods, or devices shown in the Figures, among other devices. For example, a processor (such as baseband processor 400 illustrated in and described with respect to Figure 4) and/or other hardware of such a device may be configured to cause the device to perform any combination of the illustrated method elements and/or other method elements. In various embodiments, some of the method elements shown may be performed concurrently, in a different order than shown, or may be omitted. Additional method elements may also be performed as desired. As shown, this method may operate as follows.

At 1202, a UE, such as UE 106, may configure a gap between common PRBs and dedicated PRBs to avoid an in-band emission (IBE) from the common PRBs to the dedicated PRBs.

At 1204, the UE may transmit the PSFCH using the gap between the common PRBs and the dedicated PRBs.

In some instances, a bitmap specifying the configuration may accommodate an upper bound restriction and a lower bound restriction for dedicated PRBs. In some instances, to accommodate the upper bound restriction and lower bound restriction, the bitmap may include a configured number of bits at a beginning and an end of a resource block set to a value of zero. In such instances, a length of the bitmap may be equal to a total number of PRBs in the resource block set. In some instances, to accommodate the upper bound restriction and lower bound restriction, a length of the bitmap may be set to a length less than a total number of PRBs in a resource block set. In such instances, the length of bitmap is determined by reducing the total number of PRBs by two times a defined value and the defined value may be specified by a standard.

Figure 13 illustrates a block diagram of an example of a method for sidelink physical channel resource mapping in SL-U, according to some embodiments. The method shown in Figure 13 may be used in conjunction with any of the systems, methods, or devices shown in the Figures, among other devices. For example, a processor (such as baseband processor 400 illustrated in and described with respect to Figure 4) and/or other hardware of such a device may be configured to cause the device to perform any combination of the illustrated method elements and/or other method elements. In various embodiments, some of the method elements shown may be performed concurrently, in a different order than shown, or may be omitted. Additional method elements may also be performed as desired. As shown, this method may operate as follows.

At 1302, a UE, such as UE 106, may, for multiple interlaces per sub-channel, for each orthogonal frequency division multiplexing (OFDM) symbol, use one of a frequency first interlacing rule or an interlacing first interlacing rule, e.g., a first interlacing rule.

At 1304, the UE may, for interlacing multiple sub-channels in a transmission, for an OFDM symbol, use one of a sub-channel first interlacing rule, a frequency first interlacing rule, or an interlace first interlacing rule, e.g., a second interlacing rule.

In some instances, the multiple interlacing per sub-channel may be applied to both a first type of sidelink physical channel and a second type of sidelink physical channel and the interlacing of multiple sub-channels in a transmission may be applied to the first type of sidelink physical channel but not to the second type of sidelink physical channel. The first type may be PSCCH and the second type may be PSSCH.

In some instances, for multiple interlaces per sub-channel, for the frequency first interlacing rule, a modulation symbol may be placed on a lowest unoccupied frequency physical resource block of the sub-channel.

In some instances, for multiple interlaces per sub-channel, for the interlace first interlacing rule, a modulation symbol may be placed on a lowest unoccupied frequency physical resource block of a lowest interlace of a sub-channel.

In some instances, for interlacing multiple sub-channels in a transmission, for the sub-channel first interlacing rule, mapping may start with a lowest sub-channel and a modulation symbol is placed on a lowest unoccupied frequency physical resource block of the sub-channel according to a frequency first interlacing rule or a modulation symbol is placed on a lowest unoccupied frequency physical resource block of a lowest interlace of a sub-channel according an interlace first interlacing rule.

In some instances, for interlacing multiple sub-channels in a transmission, for the frequency first interlacing rule, a modulation symbol may be placed on the lowest unoccupied frequency physical resource block (PRB) among all PRBs used for transmission, across multiple sub-channels.

In some instances, for interlacing multiple sub-channels in a transmission, for the interlace first interlacing rule, mapping may start with a lowest interlace for the transmission and continues to a next lowest interlace for the transmission.

In some instances, the UE may determine, for a contiguous resource block (RB) based sidelink physical channel transmission in SL-U, whether a sub-channel can be used for the sidelink physical channel transmission based on a condition associated with a number of physical resource blocks (PRBs) configured for the sidelink physical channel. In some instances, the sidelink physical channel may be a PSCCH or a PSSCH. In addition, the UE may transmit, in response to determining that the condition is satisfied, the sidelink physical channel. In some instances, the condition may be a total number of PRBs in a sub-channel not overlapping the guard band being greater than or equal to the number of PRBs configured for the sidelink physical channel. In some instances, the condition may be a portion of PRBs at a beginning of a sub-channel not overlapping with the guard band being greater than or equal to the number of PRBs configured for the sidelink physical channel. Further, the UE may transmit, when the condition is not satisfied, a first type of sidelink physical channel, wherein a second type of sidelink physical channel is barred from transmission. The first type of sidelink physical channel may be PSSCH and the second type of sidelink physical channel may be PSCCH. The guard band may span portions of two sub-channels and/or the guard band may be within a sub-channel.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Still other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., a UE 106) may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Any of the methods described herein for operating a user equipment (UE) may be the basis of a corresponding method for operating a base station, by interpreting each message/signal X received by the UE in the downlink as message/signal X transmitted by the base station, and each message/signal Y transmitted in the uplink by the UE as a message/signal Y received by the base station.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method for sidelink physical channel resource mapping in sidelink unlicensed spectrum, SL-U, comprising:
using (1302), for multiple interlaces per sub-channel, a first interlacing rule for orthogonal frequency division multiplexing, OFDM, symbols of the sub-channel; and
using (1304), for interlacing multiple sub-channels in a transmission, a second interlacing rule for OFDM symbols of the multiple sub-channels.

2. The method of claim 1,
wherein the multiple interlacing per sub-channel can be applied to both a first type of sidelink physical channel and a second type of sidelink physical channel.

3. The method of claim 2,
wherein the interlacing of multiple sub-channels in the transmission can be applied to the first type of sidelink physical channel but not to the second type of sidelink physical channel.

4. The method of any of claims 1-3,
wherein, for multiple interlaces per sub-channel, the first interlacing rule is a frequency first interlacing rule.

5. The method of claim 4,
wherein a modulation symbol is placed on a lowest unoccupied frequency physical resource block of the sub-channel.

6. The method of any of claims 1-5,
wherein, for interlacing multiple sub-channels in the transmission, the second interlacing rule is a frequency first interlacing rule.

7. The method of claim 6,
wherein a modulation symbol is placed on the lowest unoccupied frequency physical resource block, PRB, among all PRBs used for transmission, across multiple sub-channels.

8. The method of any of claims 1-7, further comprising:
determining, for a contiguous resource block, RB, based sidelink physical channel transmission in SL-U, whether the sub-channel can be used for the sidelink physical channel transmission based on a condition associated with a number physical resource blocks, PRBs, configured for the sidelink physical channel.

9. The method of claim 8, further comprising:
transmitting, in response to determining that the condition is satisfied, the sidelink physical channel.

10. The method of any of claims 8-9,
wherein the condition comprises a total number of PRBs in the sub-channel not overlapping a guard band being greater than or equal to the number of PRBs configured for the sidelink physical channel.

11. The method of claim 10,
wherein the guard band spans portions of two sub-channels or is within a sub-channel.

12. The method of any of claims 8-11,
wherein the condition comprises a portion of PRBs at a beginning of the sub-channel not overlapping with a guard band being greater than or equal to the number of PRBs configured for the sidelink physical channel.

13. The method of claim 12,
wherein the guard band spans portions of two sub-channels or is within a sub-channel.

14. A cellular modem (400) comprising circuitry (402) configured to cause a wireless device (106) to perform a method according to any of claims 1 to 13.

15. A user equipment device, UE, (106) comprising:
at least one antenna (335, 336); and
at least one radio (330) in communication with the at least one antenna (335, 336) and configured to cause the UE (106) to perform a method according to any of claims 1 to 13.
